# EUROPEAN PATENT SPECIFICATION

(11) **EP 2 942 543 B1**
(45) Date of publication and mention of the grant of the patent: **13.04.2022**
(21) Application number: 15165436.5
(22) Date of filing: 28.04.2015
(51) Int. Cl.: F16F 15/04

(54) **ISOLATION DEVICE FOR ABSORBING SEISMIC WAVES SUFFERED BY A REFERENCE SURFACE**
ISOLATIONSVORRICHTUNG ZUR ABSORPTION SEISMISCHEN WELLEN, DIE AUF EINE REFERENZFLÄCHE TREFFEN
DISPOSITIF D'ISOLATION POUR L'ABSORPTION D'ONDES SISMIQUES SUBIES PAR UNE SURFACE DE RÉFÉRENCE

(30) Priority: 09.05.2014 IT PD20140119
(43) Date of publication of application: 11.11.2015
(73) Proprietor: FIP MEC S.R.L., 35030 Selvazzano Dentro (PD) (IT)
(72) Inventor: Colato, Gian Paolo, I-35030 SELVAZZANO (PD) (IT); Castellano, Maria Gabriella, I-35030 SELVAZZANO (PD) (IT)
(74) Representative: Contadin, Giorgio

(56) References cited:
- EP-A1- 2 472 141
- WO-A1-96/27055
- DE-C- 48 314
- US-A1- 2005 055 896

## Description

The present invention relates to an isolation device for absorbing (or dissipating or attenuating) vibrations suffered by a reference surface and caused by natural seismic or wind events or static or dynamic effects in general, such as transportation.

The isolation device (or isolator) of the invention is particularly suitable to be used for the support, so as to confer protection on them, of civil or industrial structures, architectural or museum goods (such as for example statues or, in more general line, works of art), valuable objects (such as for example collection boards, precision instruments or tools, medical appliances, cabinets for computer science) or, more generally, valuable goods when contained in a building or in a transport means, as well as during handling, against unwanted events or effects identified above and presents a simplified construction compared to the equivalent known art.

It is known that the seismic isolation or, more generally, designated to mitigate any vibrational effect of otherwise dangerous entity isolation moves from the idea to provide a protection strategy for a given structure by reducing the forces induced by the vibrations or seismic waves in global way and, therefore, the energy transmitted by the reference surface (however referable to the soil or the ground) to the entire structure to be protected.

The protection strategy mentioned essentially consists in decoupling the motion of the ground from that one of the structure to be protected, by introducing a disconnection along the height of the structure itself (usually at the base, in case of buildings) which is therefore divided into two parts: substructure, rigidly fixed to the ground, and the superstructure. The structural continuity, and with it the transmission of the vertical loads to the ground (or to the generic reference surface), is ensured through the introduction of appropriate isolation devices, referred to as "isolators", arranged between the substructure and the superstructure and marked by a high deformability or by a low resistance to motion in horizontal direction and, usually, by a remarkable rigidity in vertical direction.

Diagrams "Ratio mass acceleration-isolation period" highlight the substantial reductions in the seismic design forces achievable by adopting these isolation devices: with reference to the usual values of the periods of an isolated structure - in the order of 2÷2.5 seconds - and of a fixed-base structure - in the order of 0.5 seconds - it is shown that the seismic forces of an isolated structure as generically defined above are about half, for ULS (Ultimate Limit State) design, and about 5÷6 times lower, for SLD (Limit State of Damage) design.

Until few years ago, all the researches made and the innovative industrial products obtained are mainly oriented, in safety terms, to the protection of structures, i.e. buildings of so-called "containment" of human activities, be they residential, business, industrial ones and so on.

In the field concerned, in the recent years it has nonetheless examined also the protection of objects or devices, especially those ones of a certain symbolic and/or economic value, that are contained inside the structure (such as a building or a transport means), in case the latter cannot be adequately protected both for objective (due to inability to "isolate" the structure from the context or to equally adapt the adjacent buildings or to proceed with underpinnings, etc.) and subjective difficulties (timeshare of the structure, expenses of adjustment too costly for the individual owner, etc.).

Furthermore, there are cases of structures to be protected somewhat light for which the isolation devices (isolators) currently present on the market would not be effective in their conservative function.

The present invention proposes the aim to illustrate a new technology for isolation, such as that one against seismic events (also known as earthquakes), particularly designed to put in safety works of art, collection boards, precision instruments, electronic instruments, medical appliances, cabinets for computer or, in general, all those valuables which are contained in a building that for various reasons it would be complicated, invasive and/or expensive to wholly protect by means of a base isolation, or which are directly supported on the ground. Normally, these valuables present relatively low mass (it should be thought to the collection boards or the works of art in general), with an extension at the base often limited if not minimal (precision instruments, computer servers, statues) and which can be hardly mechanically fixed and/or bounded to any device.

The starting idea is always to create a decoupling between the motion of the ground and, therefore, of the building connected with it, with respect to the objects which should be isolated and/or protected from the vibration, such as that one caused by an earthquake.

At the current state of the art it is, thus, indispensable to provide an isolator that can oppose a very low resistance to offsets in the horizontal plane and which, at the same time, can oppose resistance and torsional stiffness to eccentric loads appropriate.

Furthermore, in order to straighten the movements on the horizontal plane, it is necessary that the isolation device provides a certain energy dissipation, and, in order to avoid dangerous and harmful losses of support, presents an adequate (namely, not abrupt) end-of-stroke point.

According to the prior art, an isolation device of the type used for the protection of valuable objects such as works od art, collection boards, precision instruments, medical appliances or cabinets for computer which follows these guidelines, basically, includes a lower plate which is stably constrained through anchoring means to a reference surface, such as the floor or a wall of a museum or the support plane of a body of a transport means, as well as an upper plate, separated from the lower plate with respect to which is arranged substantially parallel and which in operating or applicative conditions supports an object to be isolated and/or protected, such as a statue or a precision instrument.

A known isolation device also includes linear guide means, interposed between the lower plate and the upper plate which are fixed to and having the function of allowing, when a vibration (for example a seismic event) acts on the reference surface, the sliding of the upper plate with respect to the lower plate along two longitudinal, usually horizontal, directions orthogonal each other from an initial position, where the upper plate is vertically aligned with respect to the lower plate, to a plurality of temporary positions, where the upper plate is vertically decentralized with respect to the lower plate.

A traditional isolation device of the prior art under consideration also comprises absorbing means of the vibration, interposed between the lower plate and the upper plate and operatively connected to the latter, suitable for imparting a resistance force against sliding of the upper plate along the aforesaid longitudinal directions in order to dissipate the energy generated by the vibration on the reference surface.

Finally, a generic isolation device of known type comprises elastic re-centering means, also interposed between the lower plate and the upper plate which are operatively connected with, suitable to bring the upper plate back from any of these temporary positions to the initial position (aligned to the lower plate) after the vibration has been occurred on the reference surface.

An isolation device (or isolator) thus conceived - described in detail in prior art document EP2472141 A1 - is able to effectively perform its function of protecting the valuable objects identified above, having obviously dimension smaller than those ones of a civil or industrial building to which isolation, especially seismic, technology has been devoting extensive wide attention and investment in research and development for long.

For its part, the patent document of known art DE48314 C, dating from the late nineteenth century, describes an elastic belt used in equipment, such as plane sieves (or tumblers) undergone to alternating movements, with the aim of retaining the movable part of the equipment itself along all the directions without preventing the movement but eliminating as much as possible the vibrations, bumps and lateral forces; in this prior art document it is also indicated that the elastic belt could be replaced in other embodiments by springs having the same effect of the belt itself.

It is, then, clearly understandable that the elastic means (bridle or springs) provided by the prior art document DE48314 C can only be of the linear elastic deformation type and, consequently, they are able to reduce only a well circumscribed and defined stresses or deformations, of reduced intensity, which the equipment rather generically identified in such a document is subjected to and which, moreover, the present invention is entirely extraneous and far to referring as field of application to the dissipation of vibrations of high intensity such as those ones produced by an earthquake.

However, even the isolation devices (or isolators) of the current state of the art present some recognized and obvious drawbacks.

The main drawback of known devices of isolation consists in their construction concept which is rather complicated and articulated: this is mainly due to the fact that the absorbing means of the vibration and the elastic re-centering means are unequivocally two mechanical groups distinct each other, connected in different way with the upper plate movable relative to the fixed lower plate.

This imposes production, assembly and/or maintenance costs excessive or which can be, at least, still improved and optimized, the material and labor used being equal.

A second drawback of the isolator devices of known type here concerned comes from the fact that the elastic re-centering means, typically in the form of helical springs, are loaded with a traction force, which in its maximum value, determines a rather abrupt stop of the stroke of the upper plate along one or more of the longitudinal directions on the horizontal plane, determined by the occurrence of vibration on the reference surface: such a situation clearly represents a situation of potential or at least partial danger for the valuable object supported by the upper plate, since it could cause its uncontrolled and reckless accidental fall, with the inevitable serious if not totally irreparable damage of the valuable object itself that this entails.

Starting, therefore, from the knowledge of the foregoing drawbacks of the prior art, the present invention seeks to fully remedy to them.

In particular, main purpose of the present invention is to provide an isolation device for absorbing seismic waves suffered by (or transferred to) a reference surface, as a result for example of an earthquake, which presents a constructive conception easier and which is more simple to assemble than the equivalent traditional isolation devices available on the market.

Within this purpose, it is task of the present invention to devise an isolation device for absorbing seismic waves suffered by a reference surface which presents a production cost lower than the similar devices of the known art, the cost of materials and labor used being equal.

It is another task of the invention to make available an isolation device for absorbing seismic waves suffered by a reference surface whose maintenance is exemplified with respect to the analogue isolation devices of the prior art.

It is a last but not least purpose of the present invention to create an isolation device for absorbing seismic waves suffered by a reference surface which progressively dampens the movement of the upper plate that supports the valuable object up to the end-of-stroke point, avoiding abrupt stops of the upper plate, which can be typically found in equivalent isolation devices of known type.

In the sphere of application of this second purpose, it is task of the invention to develop an isolation device for absorbing seismic waves suffered by a reference surface which allows to safeguard the structural integrity of the valuable objects that it supports more effectively than the similar devices of the prior art.

Said purposes are achieved through an isolation device for absorbing seismic waves suffered by a reference surface according to the appended claim 1, as hereinafter referred for the sake of exposure brevity.

Other technical and constructive detail features of the seismic isolation device of the present invention are contained in the corresponding dependent claims.

The abovementioned claims, specifically and concretely defined in the following, are integral part of the present description.

Advantageously, the isolation device for absorbing seismic waves suffered by a reference surface of the invention presents a construction and a consequent assembly system more simple than those one of the known isolation devices.

This is due to the fact that, in the invention, the absorbing means of the seismic vibration and the elastic re-centering means are grouped in the same elastically yielding element made of non-linear elastic (or superelastic) deformation material, preferably metallic shape memory alloy, and present in at least one exemplar.

The use of such an elastically yielding element made of non-linear elastic deformation material allows, indeed, to get both re-centering and dissipative effects without losing in performance, with the evident simplification and construction compactness that this determines.

In the preferred case in which the non-linear elastic deformation material is constituted by a metallic shape memory alloy (also known by the acronym SMA, English acronym of Shape Memory Alloy), it exploits the property of "superelasticity" of such a metallic alloy, namely its ability to undergo large deformations (at least 10 times those ones of a conventional metal) without increasing efforts accompanying to that and then completely recovering its original shape.

The elastically yielding element made of non-linear elastic deformation material used by the isolation device of the invention with re-centering and, at the same time, dissipative (or damping) functions is able to limit the relevant forces transmitted, for example, by an earthquake, dissipating part of the accumulated energy rather than completely returning it as a traditional elastic element (with linear deformation) does, and bring the movable upper plate back to the initial position, aligned vertically to the lower plate after being moved by the vibration transmitted.

Still advantageously, the isolation device for absorbing seismic waves suffered by a reference surface of the invention is manufactured and assembled at lower costs compared to isolation devices of the same intended use currently on the market, assuming the same values of the cost parameters for materials and labor.

Equally advantageously, thanks again to the elastically yielding element made of non-linear elastic deformation material (for example made of metallic shape memory alloy, also known by the abbreviation LMF which is its acronym in Italian, or with the acronym SMA which is its acronym in English), the isolation device for absorbing seismic waves suffered by a reference surface of the present invention allows to progressively soften the movement of the upper plate that supports the valuable object up to the end-of-stroke point, following the intervention of the vibration on the reference surface, avoiding that the upper plate abruptly reaches the end-of-stroke.

The dissipative capacity of the elastically yielding element made of non-linear elastic deformation material allows, indeed, in the invention to provide an isolation device (or isolator) devoid of elastic means of the helical spring type which, as said, in the known art, while having the re-centering function, by effect of their macroscopic behavior defined by Hooke's law determine a kind of backlash in stopping the stroke of the upper plate on the horizontal plane.

Moreover, in advantageous manner, this allows, therefore, the isolation device to support the valuable object ensuring a safety for its integrity greater than the equivalent known art, with the obvious advantages that this entails if it is considered the objects of historical and archaeological value kept in a museum.

Said purposes and advantages, as well as others that will emerge hereinafter, will appear to a greater extent from the detailed description which follows, relating to preferred embodiments of the isolation device for absorbing seismic waves suffered by a reference surface of the invention, given by way of indicative and illustrative, but not limitative, title with reference to the accompanying sheets of drawing in which:
- figure 1 is an exemplified assonometric view of the isolation device (or isolator) for absorbing seismic waves suffered by a reference surface, object of the invention;
- figures 2 and 3 are two distinct exploded assonometric views of the isolation device of the invention, devoid of the anchoring means;
- figure 4 is a plan view from above of the isolation device of figure 1;
- figure 5 is a side view of the isolation device of figure 1;
- figure 6 is the view of figure 4 along the cutting plane VI-VI;
- figure 7 is the view of figure 4 along the cutting plane VII-VII;
- figures 8-10 are three distinct schematic plan views from above of the isolation device of figure 1 in three respective possible and different operating positions;
- figure 11 is a Cartesian diagram showing the curve stress (in MPa)-deformation (%) - monotonic traction test up to rupture - of a wire made of a shape memory alloy Ni-Ti belonging to the isolation device of figure 1;
- figure 12 is a Cartesian diagram showing the hysteretic cycle stress (in MPa)-deformation (%) - cyclic traction test, in the superelastic field - of a wire made of shape memory Ni-Ti belonging to the isolation device of figure 1;
- figure 13 is a side view of a first embodiment of the isolation device (or isolator) of the invention;
- figure 14 is a simplified plan view of figure 13;
- figure 15 is a simplified assonometric view of a second embodiment of the isolation device (or isolator) of the invention;
- figure 16 is a cutaway assonometric view of a third embodiment of the isolation device (or isolator) of the invention;
- figure 17 is the plan view of figure 16;
- figure 18 is the side view of figure 16;
- figure 19 is an assonometric view of a fourth embodiment of the isolation device (or isolator) of the invention;
- figure 20 is the side view of figure 19.

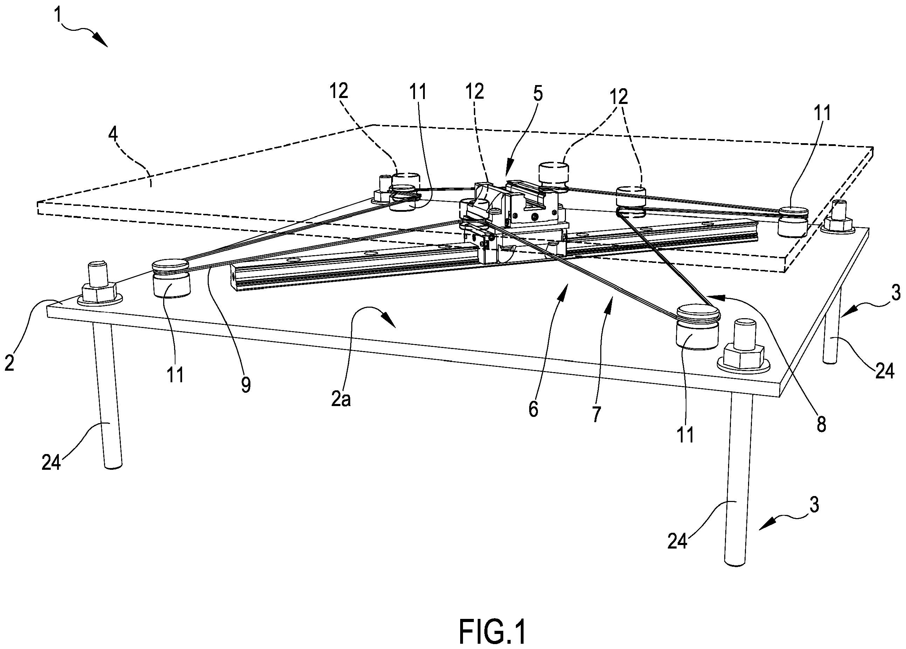

The isolation device (or isolator) of the invention, used for absorbing seismic waves suffered by a reference surface, to obtain the consequent dissipation of energy typically generated by the sudden, rapid and more or less powerful oscillations of the terrestrial crust associated with an earthquake, is illustrated in figure 1 where it is globally numbered with 1.

As shown, the isolation device 1 includes:
- a lower plate 2, made for example of steel and suitable to be firmly constrained through anchoring means, overall numbered with 3, to a reference surface, not illustrated and constituted for example by the paving of a museum, a medical office, a test laboratory or a shelf of a body of a transport means;
- an upper plate 4, made for example of steel, vertically separated from the lower plate 2 and suitable to support at least one object to be isolated and/or protected, such as a statue, a precision instrument, a medical appliance, a cabinet for computer or similar;
- linear guide means, indicated as a whole with 5, interposed between the lower plate 2 and upper plate 4 which are stably coupled with, suitable to make the upper plate 4, when a seismic wave (produced by an earthquake) acts on the reference surface, sliding with respect to the lower plate 2 along two longitudinal directions X, Y orthogonal each other from an initial (or rest) position, in which the upper plate 4 is vertically aligned with respect to the lower plate 2, to a plurality of temporary (or load) positions, in which the upper plate 4 is vertically decentralized with respect to the lower plate 2;
- absorbing means of the seismic wave, overall indicated with 6, interposed between the lower plate 2 and upper plate 4 and operatively connected with the upper plate 4, suitable to impart a resistance force against sliding of the upper plate 4 along the longitudinal directions X, Y in order to dissipate the energy generated by the seismic wave on the reference surface and, in return, on the plates 2 and 4;
- elastic re-centering means, overall numbered with 7, interposed between the lower plate 2 and upper plate 4 and operatively connected with the upper plate 4, suitable to bring the latter back from any of said temporary positions to the initial position after the seismic wave has been occurred on the reference surface.

According to the invention, the absorbing means 6 of the seismic wave and the elastic re-centering means 7 are grouped or incorporated in a same elastically yielding element, as a whole numbered with 8, made of non-linear elastic (or superelastic) deformation material and present, in the applicative case under description, in a single exemplar.

Preferably, the non-linear elastic deformation material includes any of the materials selected from the group consisting of metallic shape memory alloy or elastomer.

In particular, the metallic shape memory alloy (also known by the acronym SMA, acronym of *"Shape Memory Alloys"*) preferably comprises metallic elements such as nickel and titanium (such an alloy takes the name of *Nitinol*) that confer to it properties somewhat important, in the field of the protection of valuable objects from seismic waves or oscillations of a certain size, such as, at least: ability to recover large deformation, great ductility, excellent resistance to corrosion.

In particular, the ability to recover large deformation, or "superelasticity", of the metallic shape memory alloy (SMA) is a property, associated with the transformation - induced by the stress - between the austenitic and martensitic phases, which is useful when protection against seismic waves is concerned: in such a metallic alloy, the yield stress and the break deformation are greater than the stress at which the transformation from an austenitic phase to the martensitic phase takes place and than the maximum superelastic deformation. Furthermore, in even preferred but not binding way, the elastically yielding element 8 includes a metallic wire 9 having ends connected each other through locking means, not shown, and a predefined length which depends on the necessary displacement or the sizes of the lower plate 2 and upper plate 4 (sizes that, by way of pure example, may be 50x50 cm or 60x60 cm with a thickness of a few centimeters).

The locking means mentioned above are, for example, of the type described in the patent application EP1016765 A2 filed in the name of the same applicant of the present invention

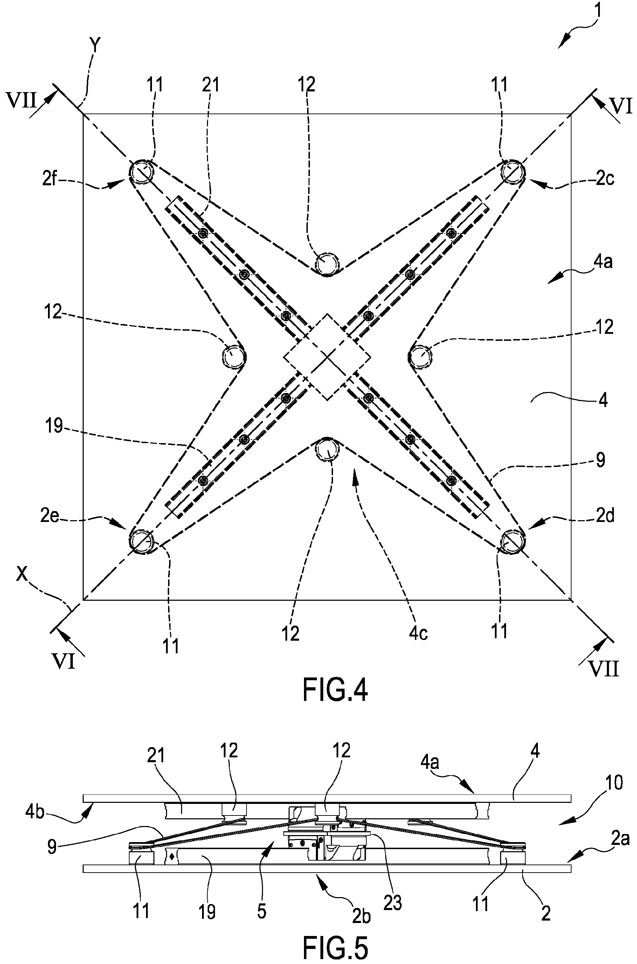

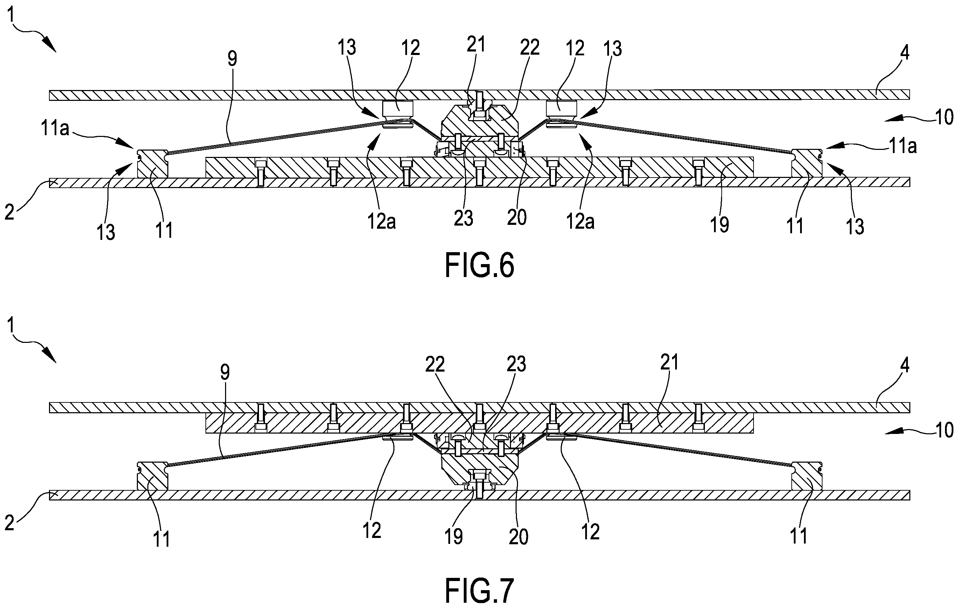

Still furthermore, the metallic wire 9, which, in the specific case, forms the elastically yielding element 8, is arranged in the inner gap 10 defined between the lower plate 2 and upper plate 4 according to a prefixed path, defined when the movable upper plate 4 is located in the initial position, as shown in figures 1-6 and in particular in figures 5-7.

These figures 5-7 show, also, that the metallic wire 9 is arranged stressed and inclined between the two plates 2 and 4, in the sense that its path develops along two mutually parallel planes and spaced apart along a vertical direction.

Typically although not limiting, the metallic wire 9 presents a thickness comprised between a few hundreds of micrometres (for example 300 µm) and a few millimeters (for example 1 mm): it depends on the intended use of the isolation device 1 of the invention and in particular on the type of valuable object that it must support in operative conditions. According to the preferred embodiment described herein, the isolation device 1 includes a plurality of fixed transmission bodies 11, 12 (which can be also defined as pulleys made for example of brass), firmly coupled with the upper face 2a of the lower plate 2 and to the lower face 4b of the upper plate 4 through junction means, not shown for exposition simplicity. More in detail, some fixed transmission bodies, numbered with 11, are coupled with the lower plate 2, while some fixed transmission bodies, numbered with 12, are coupled with the upper plate 4.

In the specific case, also, the fixed transmission bodies 11 are four in number, arranged at the corners 2c, 2d, 2e, 2f of the lower plate 2 according to the vertices of a quadrilateral, while the fixed transmission bodies 12, also in number of four, are arranged at the central zone 4c of the upper plate 4, always to define the vertices of a quadrilateral.

Preferably but not necessarily, the junction means include a plurality of screws axially projecting from each of the fixed transmission bodies 11, 12 and engaging in a corresponding plurality of nut screw made in the upper face 2a of the lower plate 2 and in lower face 4b of the upper plate 4.

Such a union system of the fixed transmission bodies 11, 12 to the plates 2, 4 ensures greater structural stability to the assembly, mostly when the seismic wave occurs on the reference surface.

It is understood that in other embodiments, not shown in the drawings that follow, of the isolation device for the absorption of seismic waves suffered from a reference surface, object of the invention, the fixed transmission bodies could be firmly coupled only with the upper face of the lower plate or only to the lower face of the upper plate.

Furthermore, in other embodiments of the isolation device of the invention, again not shown in the attached drawings, the junction means could connect a fixed transmission body simultaneously to the lower plate and to the upper plate.

In general line, the fixed transmission bodies 11, 12 are arranged spaced apart each other according to a predefined order defining a respective pre-established tortuous path L₁, L₂ for the elastically yielding element 8 which is coupled with the fixed transmission bodies 11, 12 in such a manner as to partially (however for a circumference arc not lower than 180°) wrap the fixed transmission bodies 11, 12 by inserting with a limited portion into an annular groove 13 made in each of the fixed transmission bodies 11, 12 in any operating position taken by the upper plate 4 with respect to the lower plate 2.

In any case, the number of fixed transmission bodies 11, 12 depends on the length of the elastically yielding element 8 installed, on the maximum degree of deformation attributed at design level to such an elastically yielding element 8 when the seismic wave takes place on the reference surface and on the maximum stroke along the aforesaid longitudinal directions X, Y always attributed at design level to the upper plate 4 when the seismic wave takes place on the reference surface: the greater is the number of the fixed transmission bodies 11, 12 the greater is then the length and the elongation/deformation of the elastically yielding element 8.

From an operative point of view, the elastically yielding element 8 cooperates with the fixed transmission bodies 11, 12 sliding inside the annular groove 13 when the upper plate 4 moves along the longitudinal directions X, Y as a result of occurrence of the seismic wave on the reference surface.

In a preferred but not binding manner, the annular groove 13 is made at the free end 11a, 12a of each of the fixed transmission bodies 11, 12 in order to prevent the elastically yielding element 8, especially while working, from interfering with the upper face 2a of the lower plate 2 and/or with the lower face 4b of the upper plate 4 and thus to ensure that it keeps long unchanged its own structural integrity.

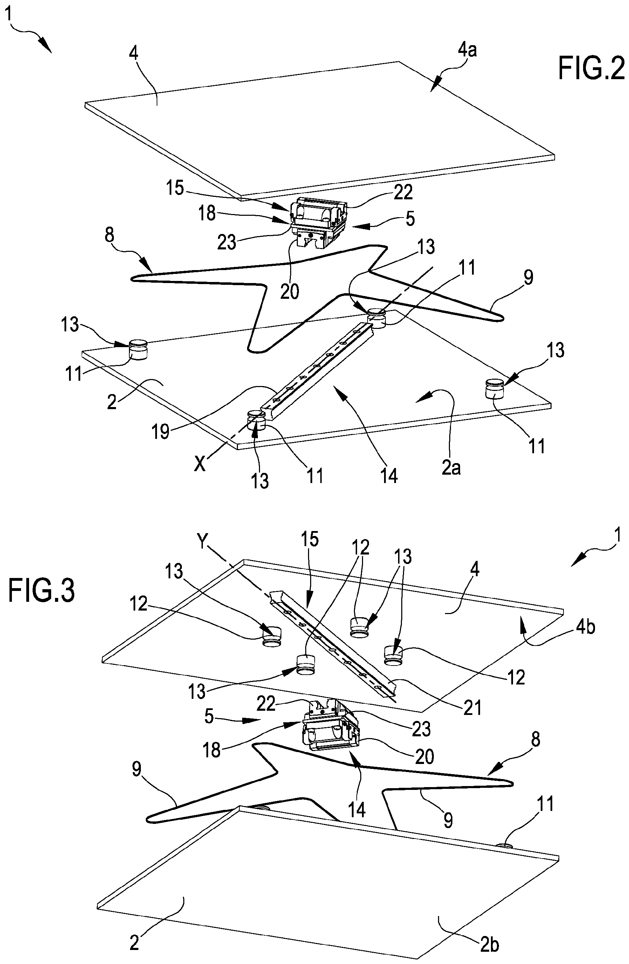

In a suitable but not binding way, the metallic wire 9 is preloaded, with a predetermined tensile force, during the phase of its application inside the annular groove 13 of the fixed transmission bodies 11, 12, in order to configure it in operative conditions already stressed. As far as the linear guide means 5 are concerned, figures 2-7 highlight that they comprise two intermediate guide groups 14, 15 - usually of the type with a very low friction coefficient
- having high torsional and flexural rigidity thanks to the ability to bear traction loads, mutually arranged at intersection (as it is well observed in figure 4) along the longitudinal directions X, Y orthogonal each other, in such a way as to ensure the movement of the movable upper plate 4 with respect to the fixed lower plate 2 on the entire horizontal plane. The intermediate guide groups 14, 15 of the linear guide means 5 of the isolation device 1 of the invention allow to reach oscillation periods, generated when the vibration acts on the reference surface and, in return, on the lower plate 2 and on the upper plate 4, equal to three÷four seconds also with light structures and objects supported by the upper face 4a of the latter.

More specifically, the linear guide means 5 comprise a first intermediate guide group, on the whole indicated with 14, coupled with the upper face 2a of the lower plate 2, and a second intermediate guide group, collectively indicated with 15, coupled with the lower face 4b of the upper plate 4 and made integral with the first intermediate guide group 14 through interconnection means, overall numbered with 18.

Preferably but not exclusively, the first intermediate guide group 14 comprises:
- a lower guide track 19 fixed to the upper face 2a of the lower plate 2 according to a first one of the longitudinal directions X, Y, namely the direction X;
- a lower sliding block 20 mounted on the lower guide track 19 through the interposition of a plurality of rolling friction elements, not visible in the attached figures.

In turn, the second intermediate guide group 15 preferably comprises:
- an upper guide track 21 fixed to the lower face 4b of the upper plate 4 according a second one of the longitudinal directions of X, Y, namely the direction Y;
- an upper sliding block 22 mounted on the upper guide track 21 through the interposition of a plurality of rolling friction elements, still not visible in the appended figures.

By purely preferred and not limiting title, the interconnection means 18 comprise a coupling plate 23 having a lower face to which the lower sliding block 20 is fixed and an upper face to which the upper sliding block 22 is fixed.

The rolling friction elements are preferably but not necessarily of the type with recirculating balls, freely rotatable in space: they ensure displacements on the whole plane marked by low friction resistance.

It is understood that in optional embodiments of the invention, not shown, the sliding block could be mounted on the lower guide track and on the upper guide track through one or more non metallic and/or friction guides to increase the dissipation through the related typical friction phenomena.

Furthermore, with reference to the anchoring means 3, they include in this case a plurality of studs 24 arranged at the peripheral zone 2g of the latter and passing through the thickness of the lower plate 2 so as to protrude from the lower surface 2b of the latter and be driven into the underlying reference structure.

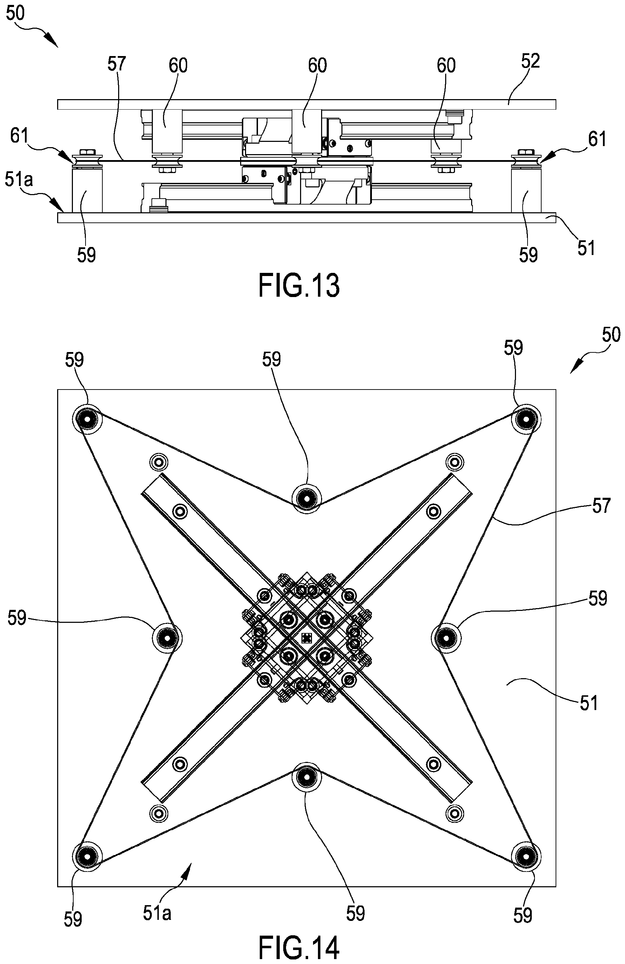

The subsequent figures 13 and 14 show a first embodiment of the invention in which the isolation device (isolator), now globally numbered with 50, differs from the isolation device 1 previously described for the arrangement assumed by the elastically yielding element 57 between the lower plate 51 and upper plate 52: as it can be observed in particular in figure 13, indeed, the elastically yielding element 57 is, in this case, suitably arranged along a single horizontal plane along its entire path.

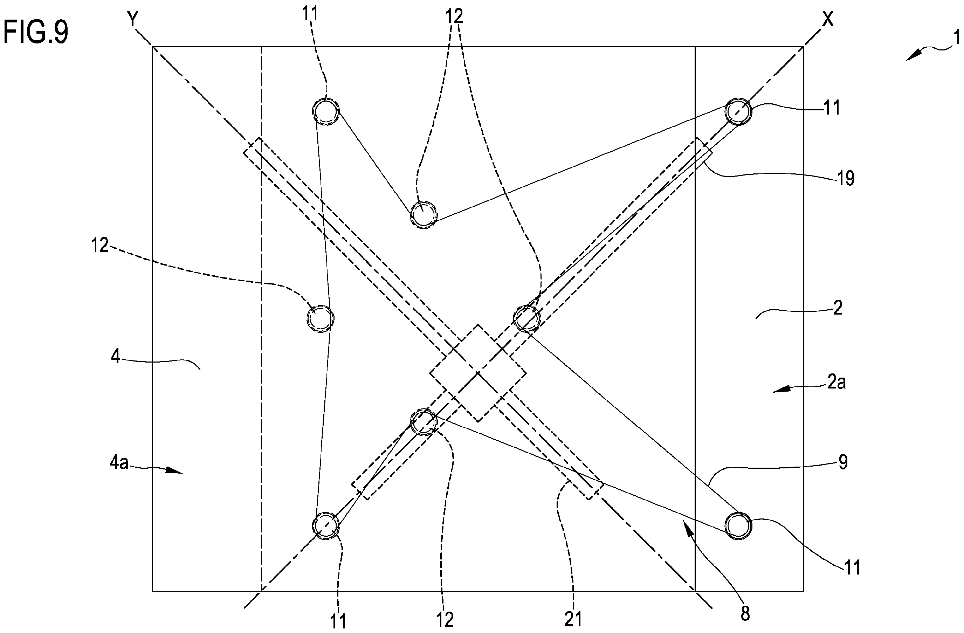

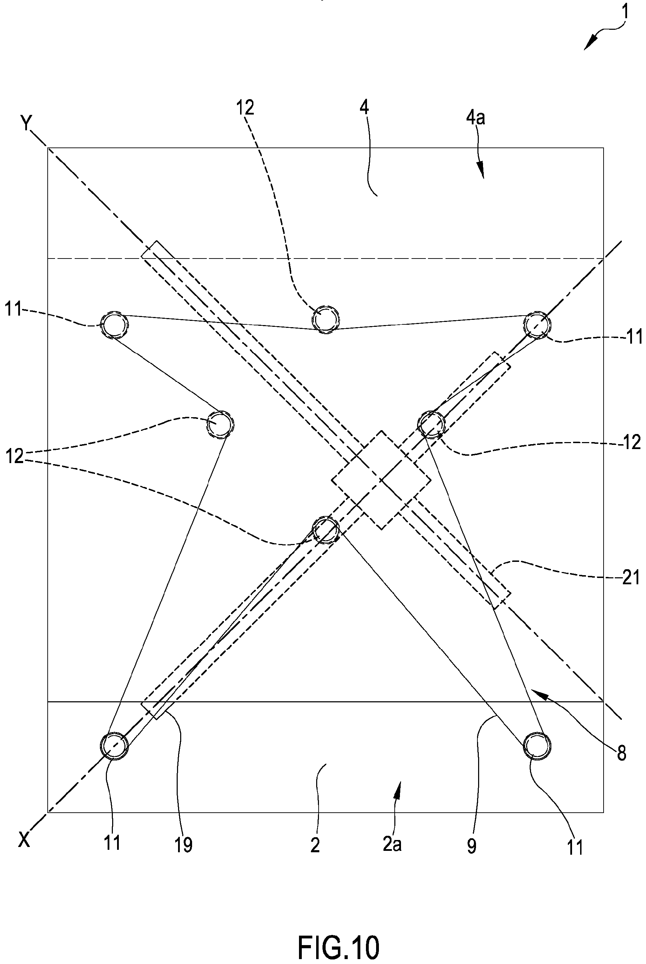

Such a configuration allows to maintain the cutting action of the seismic wave on a purely horizontal plane thanks to the fact of avoiding (or at least limiting) the phenomenon, otherwise inevitable, of the pitch of the upper plate 52 which would make the object to be isolated and/or protected (statue, precision instrument, medical appliance, cabinet for computer or similar) dangerously unstable and is due both to the inclination of the elastically yielding element and the change of such an inclination during the sliding motion of the upper plate with respect to the lower plate, as it happens in the isolation device 1 visible in figures 1-10.

The horizontality of the elastically yielding element 57 derives from the horizontal alignment between the annular groove 61 of the fixed transmission bodies 59 of the lower plate 51 and the annular groove 61 of the fixed transmission bodies 60 of the upper plate 52: in other words, the annular groove 61 of the fixed transmission bodies 59 and the annular groove 61 of the fixed transmission bodies 60 are placed at the same height from the upper face 51a of the lower plate 51.

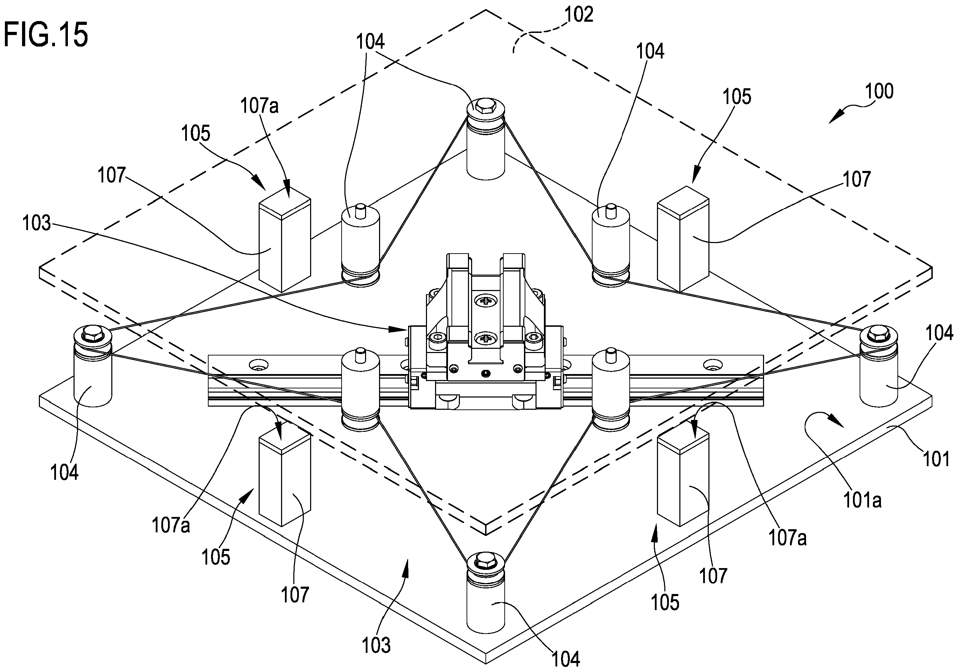

In the next figure 15 another possible embodiment of the invention is shown where the isolation device, now generally designated by 100, differs from the isolation device 50 just described for including also auxiliary support means, overall marked with 105, interposed between the lower plate 101 and upper plate 102 and distinct from the transmission bodies, in turn indicated as a whole with 104: the auxiliary support means 105 are, therefore, arranged in the inner gap 106 defined between the lower plate 101 and upper plate 102.

In particular, the auxiliary support means 105 are firmly fixed - for example by fixing screws, junction welding, snap-fittings and/or the like - to the upper face 101a of the lower plate 101 and act as supplementary support points in order to (or at least contribute to) keep the movable upper plate 102 horizontal, avoiding its pitch phenomenon which, as said, in presence of an earthquake, causes sudden, uncontrolled and therefore potentially dangerous jerks of the object to be isolated/protected installed or placed on the upper plate 102.

In the specific case, by way of pure example, the auxiliary support means 105 - that are useful especially when the linear guide means, here as a whole indicated with 103, include only two intermediate guide groups - include a plurality of strike blocks 107 provided with an upper wall 107a flat and made of a material suitable to ease sliding on them of the upper plate 102.

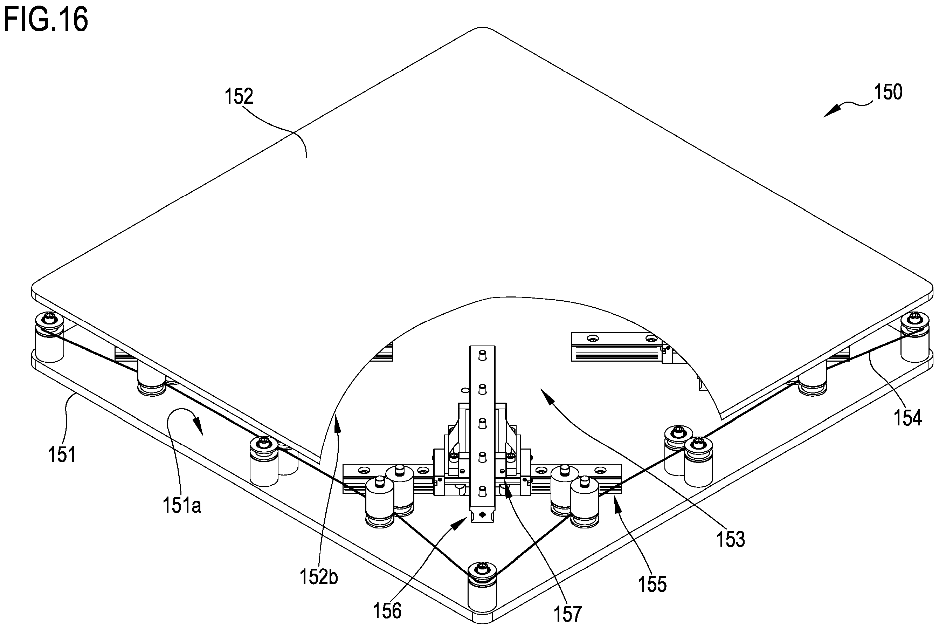

Figure 16 shows a further embodiment of the invention in which the isolation device, on the whole now indicated with 150, differs from those ones previously described by the composition of the linear guide means, collectively indicated with 153, interposed between the lower plate 151 and upper plate 152.

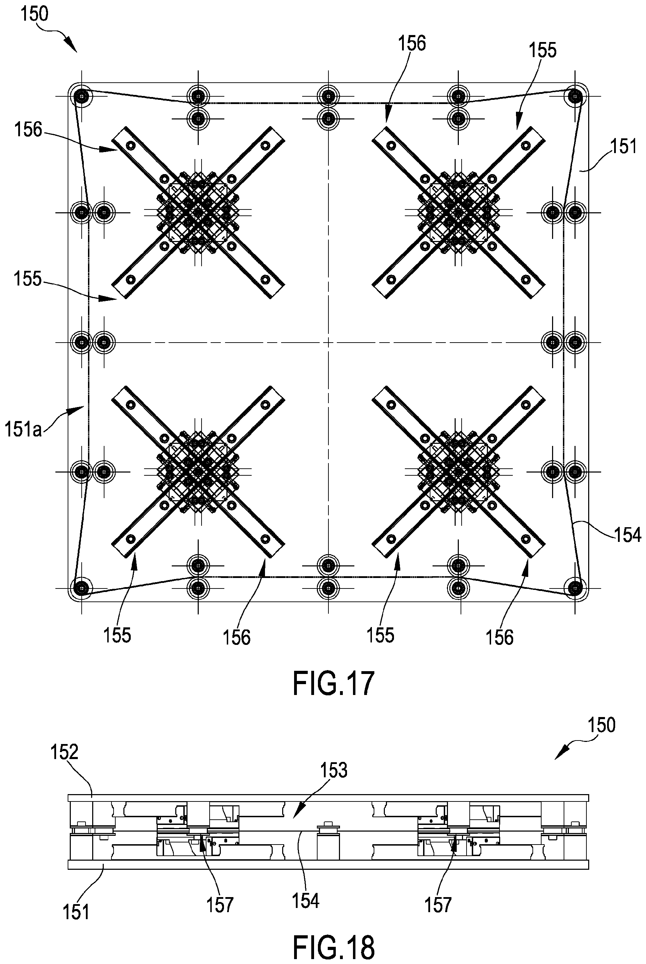

In this case, indeed, the linear guide means 153 comprises four pairs of intermediate guide groups 155, 156 distinct and separated each other, better visible in figure 17, each of which composed of a first intermediate guide group 155 coupled with the upper face 151a of the lower plate 151 and of a second intermediate guide group 156 coupled with the lower face 152b of the upper plate 152 and made integral with the first intermediate guide group 155 through interconnection means, as a whole numbered with 157.

In essence, each of the pairs of intermediate guide groups 155, 156 of the isolation device 150 is of the type described above for the isolation device 1 (although in this case the elastically yielding element 154 is arranged in a purely horizontal plane, as figure 18 well highlights).

Preferably, the pairs of intermediate guide groups 155, 156 of the isolation device 150 of the invention are uniformly distributed on the lower plate 151 and upper plate 152, in such a way that the centre points of each of them form the vertices of a hypothetical regular quadrilateral (in this case a square).

The constructive solution of the present invention, under description with reference to figures 16-18, is particularly useful and efficient when the anti-seismic board (or isolation device) 150 used presents particularly high sizes, however greater than the sizes of the anti-seismic boards of the preceding figures 1-15, in order to allow, therefore, a more distributed load in plan, or to increase the flexural and torsional rigidity of the isolation device (or isolator) concerned.

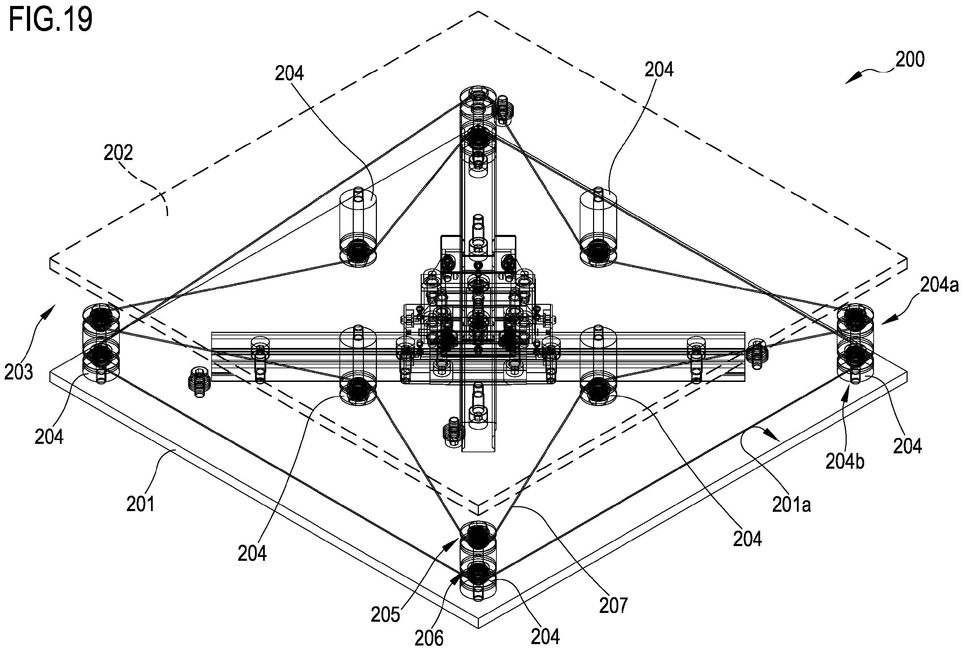

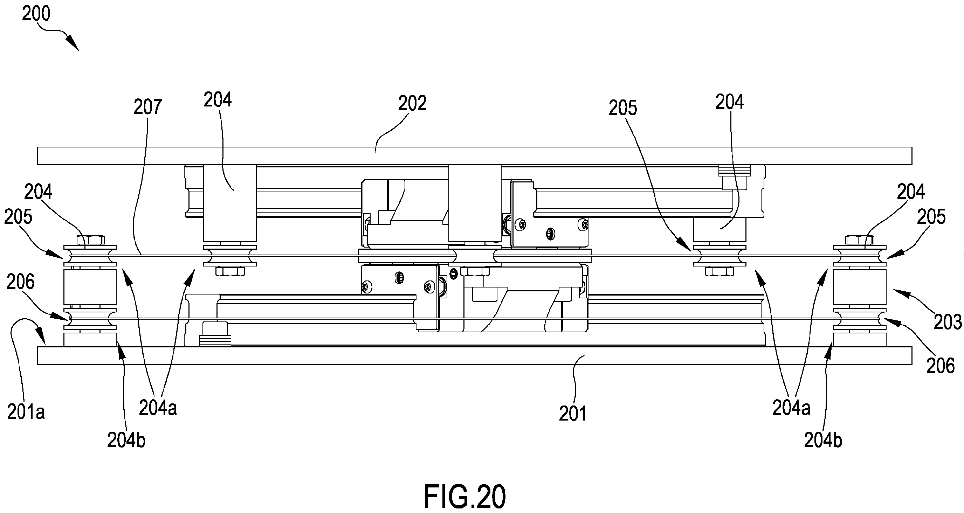

Finally, figure 19 illustrates another alternative embodiment of the invention, in which the isolation device, as a whole now indicated with 200, differs from the preceding ones by including a single elastically yielding element 207, arranged in the inner gap 203 between the lower plate 201 and upper plate 202 in this case preferably on more levels, i.e., mainly on two horizontal planes mutually parallel and spaced apart along a vertical direction, as figure 20 better shows, but tilted between the two plates 201 and 202 for at least a portion of its path. As always, the elastically yielding element 207 is coupled with the fixed transmission bodies 204 so as to partially wrap them; however, in this case, such an elastically yielding element 207 is inserted (for a limited stretch) into respective annular grooves 205 made at the free end 204a of each of the fixed transmission bodies 204 and (always for a limited stretch) also in annular grooves 206, separated from the annular grooves 205, made at the bound end 204b of only the fixed transmission bodies 204 in this case integral with the upper surface 201a of the lower plate 201.

The embodiment of figures 19 and 20 lends itself to be used when it is desired to limit the percentage deformations suffered by the elastically yielding elements 207, through an increase of its overall length in the inner gap 203.

Further embodiments of the isolation device of the invention, not shown in the attached drawing sheets, could provide that a single elastically yielding element is installed so as to perform a series of laps on the fixed transmission bodies, still with the aim of limiting, through the increase of its length, the percentage deformations of the elastically yielding element that, in the invention, incorporates the absorbing means of the seismic wave and the re-centering means.

In these cases, the elastically yielding element will be partially inserted, for each lap, in the same annular groove made in each of the fixed transmission bodies, remaining arranged in the assembly according to a horizontal plane, or on multiple levels according predominantly between two or more planes parallel and spaced apart each other along a vertical direction, but tilted between the two plates and for at least a portion of its path.

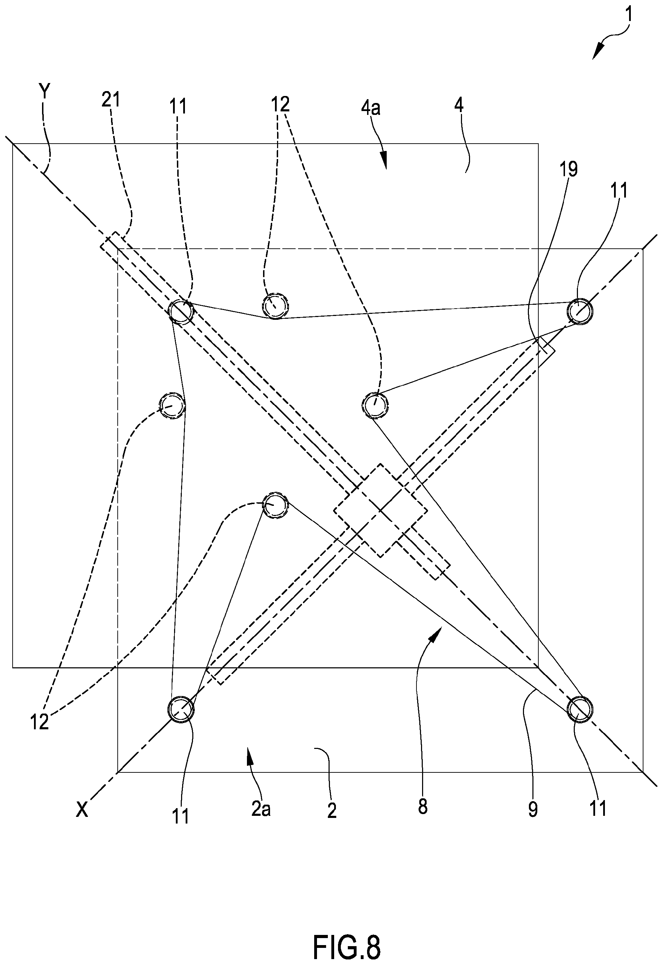

Operatively, the behavior of the isolation device 1 of the invention is illustrated at least partly in figures 8, 9 and 10 which show the maximum sliding on the two intermediate guide groups 14, 15 of the linear guide means 5 admitted for the upper plate 4 with respect to the lower plate 2, respectively simultaneously along the longitudinal directions X and Y, only along the longitudinal direction X and only along the longitudinal direction Y when a wave generated by an earthquake acts on the reference surface which the lower plate 2 is stably coupled with by the anchoring means 3.

During such an external vibrational event which acts on the reference surface determining the oscillation of the upper plate 4 which supports the valuable object to be protected, the elastically yielding element 8 made of non-linear elastic deformation material, in the case at issue represented by a metallic shape memory alloy (SMA) wire 9, performs a damping or dissipative function of the energy transmitted by the seismic wave and, at the same time, a re-centering function that brings the upper plate back from the temporary (or load) position reached to the initial (or rest) position in which it is vertically aligned to the lower plate 2. During the horizontal sliding of the upper plate 4 along one or more of the longitudinal directions X, Y, the preloaded elastically yielding element 8 winds articulating in a tortuous path different from the prefixed initial tortuous path, visible in figures 1 and 2, while remaining integral to the fixed transmission bodies 11, 12 and sliding within the annular groove 13 made in each of them.

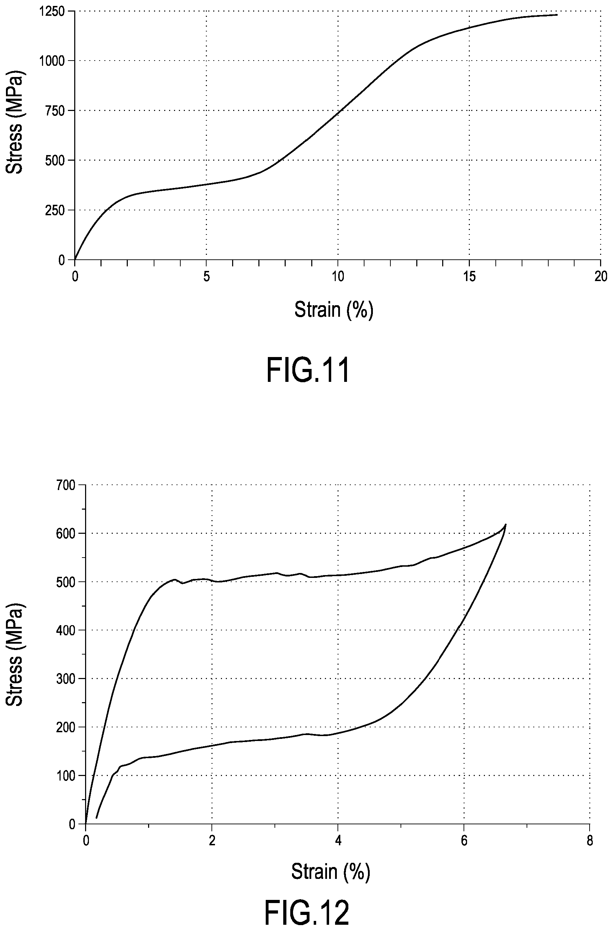

The diagrams of figures 11 and 12 attached show how the use in isolators of elastically yielding elements made of non-linear elastic deformation material, i.e. of metallic shape memory alloy (LMF, Italian acronym or SMA, English acronym), are capable of limiting the forces transmitted by a seismic event and to dissipate in part the huge (and in any case much higher than that one suffered and effectively bearable by the sieve of the machinery described in the prior art document DE48341 C) energy accumulated as a result of that event instead of completely returning it like a conventional elastic element, bringing the component (in particular the upper plate 4), on which one or more of these elastically yielding elements act, back in the proper initial rest position, perfectly centered with respect to underlying fixed basement (in particular the lower plate 2).

The advantage brought by the isolation device (or isolator) for absorbing seismic waves suffered by a reference surface of the present invention compared to isolation devices of the prior art comparable to it appears evident, materializing in a greater constructional simplification without this detracts from the functionalities prerogative of the isolators concerned.

The safety of the valuable object that the isolation device of the invention supports results, however, improved compared to the prior art, since the elastically yielding element made of non-linear elastic deformation (or superelastic) material allows the upper plate to reach the point of end-of-stroke of its own deviation from the initial position in a more gradual and more controlled way than that one obtainable with the known equivalent isolation devices. The non-linear elastic deformation material which is made the elastically yielding element of absorption and re-centering with that forms the heart of the invention constitutes a significant and important innovation in the field of the technique that handles to provide isolators capable of dissipating deformations of remarkable entity - such as those ones produced by a seismic event - for the protection and preservation of the objects supported: such a field always and up to now follows a well-established manufacturing philosophy that provides the production of isolators provided with elastic means having linear behavior (as it is apparent from prior art document EP2472141 A1), however, necessarily distinct from the absorbing means, and that even the teachings from other sectors of the art, represented for example by the prior document DE48314 C, is able to mutate, with the drawbacks which this constructive practice entails and which have been already highlighted before.

According to the description just given, it is understood, therefore, that the isolation device for absorbing seismic waves (or oscillations or vibrations) suffered by a reference surface of the invention achieves the purposes and reaches the advantages already mentioned.

At execution stage, changes could be made to the isolation device of the present invention, used expressly to absorb seismic waves suffered by a reference surface, consisting, for example, in a number of elastically yielding elements distinct each other exceeding two, in which case the elastically yielding elements will be preferably installed on multiple horizontal planes parallel each other according to a prefixed tortuous path and will contextually deform upon movement of the upper plate caused by the wave transmitted.

It follows that in a possible embodiment, the elastically yielding elements (typically ten÷twelve in number) could be gathered in bunches in the same annular groove of the fixed transmission bodies, thus being adjacent each other, but on horizontal planes different and parallel, while in another embodiment the elastically yielding elements could arranged in two or more distinct annular grooves made in the fixed transmission bodies, also gathered in bunches in one or more of the abovementioned annular grooves and in any case always arranged on horizontal planes mutually different and parallel.

In addition, the metallic shape memory alloy could present composition different from that one previously described, as said nickel and titanium-based: more precisely and suitably, in alternative embodiments of the invention, the metallic shape memory alloy of the elastically yielding element could be copper-based in ternary copper-zinc-aluminum, copper-zinc-nickel systems or in quaternary systems if it is provide the presence of manganese or still iron-based in usually quaternary iron-aluminum-manganese-nickel (the latter in small amounts) systems.

Compared to these nickel-titanium alloys, provided with greater shape memory effect deformation (up to 8%÷10%), greater corrosion resistance, greater thermal stability and greater ductility, copper-based alloys are less expensive, can be fused and extruded in air more easily and have a wider range of transformation, although being equipped with a lower shape memory effect deformation, typically less than 5%.

Beyond to that, there will be other constructive optional embodiments, not shown, of the isolation device for absorbing seismic waves suffered by a reference surface herewith claimed as exclusive right, in which the linear guide means comprise bodies different from those ones previously described in relation to the preferred embodiment of solution idea, which does not affect the advantage brought by the present invention.

Moreover, in other embodiments, not shown, of the isolation device of the invention, the anchoring means with which the lower plate is fixed to the reference surface could be different from those ones yet described (studs) and shown in the accompanying figures.

It is, finally, clear that several other changes could be made to the isolation device (or isolator) concerned, without departing from the scope of the invention as defined in the appended claims, as it is clear that, in the practical implementation of the invention, materials, shapes and sizes of the illustrated details could be changed, as needed, and replaced with others technically equivalent.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Isolation device (1; 50; 100; 150; 200) for absorbing seismic waves suffered by a reference surface comprising:
- a lower plate (2; 51; 101; 151; 201) suitable to be firmly constrained through anchoring means (3) to a reference surface;
- an upper plate (4; 52; 102; 152; 202), separated from said lower plate (2; 51; 101; 151; 201) and suitable to support at least one object to be isolated and/or protected;
- linear guide means (5; 103; 153), interposed between said lower plate (2; 51; 101; 151; 201) and said upper plate (4; 52; 102; 152; 202) which are firmly coupled with, suitable to make said upper plate (4; 52; 102; 152; 202), when a seismic wave acts on said reference surface, sliding with respect to said lower plate (2; 51; 101; 151; 201) along two longitudinal directions (X, Y) orthogonal each other from an initial position, in which said upper plate (4; 52; 102; 152; 202) is vertically aligned with respect to said lower plate (2; 51; 101; 151; 201), to a plurality of temporary positions, in which said upper plate (4; 52; 102; 152; 202) is vertically decentralized with respect to said lower plate (2; 51; 101; 151; 201);
- absorbing means (6) of said seismic wave, interposed between said lower plate (2; 51; 101; 151; 201) and said upper plate (4; 52; 102; 152; 202) and operatively connected with said upper plate (4; 52; 102; 152; 202), suitable to impart a resistance force against sliding of said plate upper (4; 52; 102; 152; 202) along said longitudinal directions (X, Y) in order to dissipate the energy generated by said seismic wave on said reference surface;
- elastic re-centering means (7), interposed between said lower plate (2; 51; 101; 151; 201) and said upper plate (4; 52; 102; 152; 202) and operatively connected with said upper plate (4; 52; 102; 152; 202), suitable to bring said upper plate (4; 52; 102; 152; 202) back from any of said temporary positions to said initial position after said seismic wave has been occurred on said reference surface,
**characterized in that** said absorbing means (6) of said seismic wave and said elastic re-centering means (7) are grouped in a same elastically yielding element (8; 57; 154; 207) made of non-linear elastic deformation material and present in one or more exemplars.

2. Device (1; 50; 100; 150; 200) according to claim 1,
**characterized in that** said non-linear elastic deformation material includes any of the materials selected from the group consisting of metallic shape memory alloy or elastomer.

3. Device (1; 50; 100; 150; 200) according to claim 2,
**characterized in that** said metallic shape memory alloy comprises metal elements such as nickel and titanium that give to said metallic alloy of said elastically yielding element (8; 57; 154; 207) at least ability to recover large deformations, high ductility, excellent corrosion resistance.

4. Device (200) according to any of the preceding claims, **characterized in that** said elastically yielding element (207), in one or more exemplars, is arranged at more horizontal planes mutually parallel and spaced apart along a vertical direction in such a way as to limit percentage deformations thereof.

5. Device (50; 100; 150; 200) according to any of claims 1-3,
**characterized in that** said elastically yielding element (57; 154; 207), in one or more exemplars, is arranged along a single horizontal plane in order to avoid or at least limit pitch phenomenon of said upper plate (52; 102; 152; 202) with respect to said lower plate (51; 101; 151; 201).

6. Device (1; 50; 100; 150; 200) according to any of the preceding claims, **characterized in that** said elastically yielding element (8; 57; 154; 207) includes a metallic wire (9) having ends connected each other through locking means, having a predefined length depending on the sizes of said lower plate (2; 51; 101; 151; 201) and upper plate (4; 52; 102; 152; 202) and arranged in the inner gap (10; 106; 203) defined between said lower plate (2; 51; 101; 151; 201) and upper plate (4; 52; 102; 152; 202) according to a prefixed path.

7. Device (1; 50; 100; 150; 200) according to any of the preceding claims, **characterized in that** it includes a plurality of fixed transmission bodies (11, 12; 59, 60; 104; 204), firmly coupled through junction means with the upper face (2a; 51a; 101a; 151a; 201a) of said lower plate (2; 51; 101; 151; 201) and/or to the lower face (4b; 152b) of said upper plate (4; 52; 102; 152; 202), arranged spaced apart each other according to a predefined order defining a tortuous pre-established path for said elastically yielding element (8; 57; 154; 207) which is coupled with said fixed transmission bodies (11, 12; 59, 60; 104; 204) so as to partially wrap said fixed transmission bodies (11, 12; 59, 60; 104; 204) by inserting with a limited portion into an annular groove (13) made in each of said fixed transmission bodies (11, 12; 59, 60; 104; 204).

8. Device (1; 50; 100; 150; 200) according to claim 7,
**characterized in that** the number of said fixed transmission bodies (11, 12; 59, 60; 104; 204) depends on the length of said elastically yielding element (8; 57; 154; 207) installed, the maximum degree of deformation attributed at design level to said elastically yielding element (8; 57; 154; 207) when said seismic wave takes place on said reference surface and the maximum stroke along said longitudinal directions (X , Y) attributed at design level to said upper plate (4; 52; 102; 152; 202) when said seismic wave takes place on said reference surface.

9. Device (1; 50; 100; 150; 200) according to claim 7 or 8,
**characterized in that** said elastically yielding element (8; 57; 154; 207) cooperates with said fixed transmission bodies (11, 12; 59, 60; 104; 204) sliding in said annular groove (13; 205, 206) when said seismic wave acts on said reference surface.

10. Device (1; 50; 100; 150; 200) according to any of the claims 7 to 9,
**characterized in that** said annular grove (13; 205) is made at the free end (11a, 12a; 204a) of each of said fixed transmission bodies (11, 12; 59, 60; 104; 204) in order to prevent said elastically yielding element (8; 57; 154; 207) from interfering with said upper face (2a; 51a; 101a; 151a; 201a) of said lower plate (2; 51; 101; 151; 201) and/or said lower face (4b; 152b) of said upper plate (4; 52; 102; 152; 202) and to ensure it keeps unchanged its own structural integrity.

11. Device (1; 50; 100; 150; 200) according to any of the claims 7 to 10, when dependent on claim 4 and claim 6,
**characterized in that** said metallic wire (9) is preloaded, with a predetermined tensile force immediately before or during its application inside said annular groove (13; 205, 206) of said fixed transmission bodies (11, 12; 59, 60; 104; 204).

12. Device (100) according to any of the preceding claims, **characterized in that** it includes auxiliary support means (105) interposed between said lower plate (101) and said upper plate (102) firmly fixed to the upper face (101a) of said lower plate (101) and suitable to act as supplementary support points in order to keep horizontal said upper plate (102) to avoid the pitch phenomenon of said upper plate (102) with respect to said lower plate (101).

13. Device (1; 50; 100; 150; 200) according to any of the preceding claims, **characterized in that** said linear guide means (5; 103; 153) comprise at least two intermediate guide groups (14, 15; 155, 156) of the type with high torsional and flexural rigidity, mutually arranged at intersection along said longitudinal directions (X, Y) orthogonal each other, in such a way as to ensure the movement of said upper plate (4; 52; 102; 152; 202) with respect to said lower plate (2; 51; 101; 151; 201) on the entire horizontal plane.

14. Device (1; 50; 100; 150; 200) according to claim 13,
**characterized in that** said linear guide means (5; 103; 153) comprise at leas one first intermediate guide group (14; 155) coupled with the upper face (2a; 51a; 101a; 151a; 201a) of said lower plate (2; 51; 101; 151; 201) and at least one second intermediate guide group (15; 156) coupled with the lower face (4b; 152b) of said upper plate (4; 52; 102; 152; 202) and made integral with said first intermediate guide group (14; 155) through interconnection means (18; 157).

15. Device (1; 50; 100; 150; 200) according to claim 14,
**characterized in that** said first intermediate guide group (14; 155) comprises:
- a lower guide track (19) fixed to said upper face (2a; 51a; 101a; 151a; 201a) of said lower plate (2; 51; 101; 151; 201) according to a first of said longitudinal directions (X, Y);
- a lower sliding block (20) mounted on said lower guide track (19) through the interposition of a plurality of rolling friction elements.

16. Device (1; 50; 100; 150; 200) according to claim 14 or 15,
**characterized in that** said second intermediate guide group (15; 156) comprises:
- an upper guide track (21) fixed to said lower face (4b; 151b) of said upper plate (4; 52; 102; 152; 202) according to a second of said longitudinal directions (X, Y);
- an upper sliding block (22) mounted on said upper guide track (21) through the interposition of a plurality of rolling friction elements.

## Patentansprüche

1. Isolationsvorrichtung (1; 50; 100; 150; 200) zur Absorption von seismischen Wellen, die von einer Referenzfläche aufgenommen werden, umfassend:
- eine untere Platte (2; 51; 101; 151; 201), die geeignet ist, durch Verankerungsmittel (3) fest an einer Bezugsfläche befestigt zu werden;
- eine obere Platte (4; 52; 102; 152; 202), die von der unteren Platte (2; 51; 101; 151; 201) getrennt und geeignet ist, mindestens einen zu isolierenden und/oder zu schützenden Gegenstand zu tragen;
- lineare Führungsmittel (5; 103; 153), die zwischen der unteren Platte (2; 51; 101; 151; 201) und der oberen Platte (4; 52; 102; 152; 202) angeordnet und fest mit diesen gekoppelt sind, geeignet, um die obere Platte (4; 52; 102; 152; 202), wenn eine seismische Welle auf die Bezugsfläche einwirkt, in Bezug auf die untere Platte (2; 51; 101; 151; 201) entlang zweier zueinander orthogonaler Längsrichtungen (X, Y) aus einer Ausgangsposition, in der die obere Platte (4; 52; 102; 152; 202) vertikal in Bezug auf die untere Platte (2; 51; 101; 151; 201) ausgerichtet ist, in eine Vielzahl temporärer Positionen gleiten zu lassen, in denen die obere Platte (4; 52; 102; 152; 202) vertikal in Bezug auf die untere Platte (2; 51; 101; 151; 201) dezentralisiert ist;
- mittel (6) zur Absorption der seismischen Welle, die zwischen der unteren Platte (2; 51; 101; 151; 201) und der oberen Platte (4; 52; 102; 152; 202) angeordnet sind und mit der oberen Platte (4; 52; 102; 152; 202) in Wirkverbindung stehen, die geeignet sind, eine Widerstandskraft gegen das Gleiten der oberen Platte (4; 52; 102; 152; 202) entlang der Längsrichtungen (X, Y) auszuüben, um die von der seismischen Welle erzeugte Energie auf der Bezugsfläche zu zerstreuen;
- eine elastische Rezentriereinrichtung (7), die zwischen der unteren Platte (2; 51; 101; 151; 201) und der oberen Platte (4; 52; 102; 152; 202) angeordnet ist und mit der oberen Platte (4; 52; 102; 152; 202) in Wirkverbindung steht, die geeignet ist, die obere Platte (4; 52; 102; 152; 202) aus jeder der vorübergehenden Positionen in die Ausgangsposition zurückzubringen, nachdem die seismische Welle auf der Bezugsfläche aufgetreten ist,
**dadurch gekennzeichnet, dass** die Absorptionsmittel (6) der seismischen Welle und die elastischen Rückstellmittel (7) in ein und demselben elastisch nachgebenden Element (8; 57; 154; 207) gruppiert sind, das aus einem nichtlinearen elastischen Verformungsmaterial besteht und in einem oder mehreren Exemplaren vorhanden ist.

2. Vorrichtung (1; 50; 100; 150; 200) nach Anspruch 1, **dadurch gekennzeichnet, dass** das nichtlineare elastische Verformungsmaterial eines der Materialien umfasst, die aus der Gruppe ausgewählt sind, die aus einer metallischen Formgedächtnislegierung oder einem Elastomer besteht.

3. Vorrichtung (1; 50; 100; 150; 200) nach Anspruch 2, **dadurch gekennzeichnet, dass** die metallische Formgedächtnislegierung Metallelemente wie Nickel und Titan umfasst, die der metallischen Legierung des elastisch nachgebenden Elements (8; 57; 154; 207) zumindest die Fähigkeit, große Verformungen wiederherzustellen, eine hohe Duktilität und eine ausgezeichnete Korrosionsbeständigkeit verleihen.

4. Vorrichtung (200) nach einem der vorhergehenden Ansprüche, **dadurch gekennzeichnet, dass** das elastisch nachgebende Element (207) in einem oder mehreren Beispielen in mehreren horizontalen Ebenen angeordnet ist, die zueinander parallel und entlang einer vertikalen Richtung beabstandet_sind, so dass prozentuale Verformungen davon begrenzt werden.

5. Vorrichtung (50; 100; 150; 200) nach einem der Ansprüche 1 bis 3, **dadurch gekennzeichnet, dass** das elastisch nachgebende Element (57; 154; 207) in einem oder mehreren Exemplaren entlang einer einzigen horizontalen Ebene angeordnet ist, um eine Neigungserscheinung der oberen Platte (52; 102; 152; 202) in Bezug auf die untere Platte (51; 101; 151; 201) zu vermeiden oder zumindest zu begrenzen.

6. Vorrichtung (1; 50; 100; 150; 200) nach einem der vorhergehenden Ansprüche, **dadurch gekennzeichnet, dass** das elastisch nachgebende Element (8; 57; 154; 207) einen Metalldraht (9) umfasst, dessen Enden durch Verriegelungsmittel miteinander verbunden sind, der eine vordefinierte Länge aufweist, die von den Größen der unteren Platte (2; 51; 101; 151; 201) und der oberen Platte (4; 52; 102; 152; 202) abhängt und in dem inneren Spalt (10; 106; 203), der zwischen der unteren Platte (2; 51; 101; 151; 201) und der oberen Platte (4; 52; 102; 152; 202) definiert ist, gemäß einem vorbestimmten Weg angeordnet ist.

7. Vorrichtung (1; 50; 100; 150; 200) nach einem der vorhergehenden Ansprüche, **dadurch gekennzeichnet, dass** sie eine Vielzahl von festen Übertragungskörpern (11, 12; 59, 60; 104; 204) aufweist, die über Verbindungsmittel fest mit der oberen Fläche (2a; 51a; 101a; 151a; 201a) der unteren Platte (2; 51; 101; 151; 201) und/oder mit der unteren Fläche (46; 1526) der oberen Platte (4; 52; 102; 152; 202) verbunden und gemäß einer vordefinierten Reihenfolge voneinander beabstandet angeordnet sind und einen gewundenen, vorher festgelegten Weg für das elastisch nachgebende Element (8; 57; 154; 207) definieren, das mit den festen Übertragungskörpern (11, 12; 59, 60; 104; 204) gekoppelt ist, um die festen Übertragungskörper (11, 12; 59, 60; 104; 204) teilweise zu umhüllen, indem es mit einem begrenzten Abschnitt in eine ringförmige Nut (13) eingeführt wird, die in jedem der festen Übertragungskörper (11, 12; 59, 60; 104; 204) ausgebildet ist.

8. Vorrichtung (1; 50; 100; 150; 200) nach Anspruch 7, **dadurch gekennzeichnet, dass** die Anzahl der festen Übertragungskörper (11, 12; 59, 60; 104; 204) von der Länge des eingebauten elastisch nachgiebigen Elements (8; 57; 154; 207) abhängt, wobei der maximale Verformungsgrad, der dem elastisch nachgiebigen Element (8; 57; 154; 207) zugeschrieben wird, wenn die seismische Welle auf der Bezugsfläche auftritt, und dem maximalen Hub entlang der Längsrichtungen (X, Y), der der oberen Platte (4; 52; 102; 152; 202) auf Auslegungsniveau zugeschrieben wird, wenn die seismische Welle auf der Bezugsfläche auftritt.

9. Vorrichtung (1; 50; 100; 150; 200) nach Anspruch 7 oder 8, **dadurch gekennzeichnet, dass** das elastisch nachgebende Element (8; 57; 154; 207) mit den festen Übertragungskörpern (11, 12; 59, 60; 104; 204) zusammenwirkt, die in der Ringnut (13; 205, 206) gleiten, wenn die seismische Welle auf die Bezugsfläche wirkt.

10. Vorrichtung (1; 50; 100; 150; 200) nach einem der Ansprüche 7 bis 9, **dadurch gekennzeichnet, dass** die Ringnut (13; 205) am freien Ende (11a, 12a; 204a) jedes der festen Übertragungskörper (11, 12; 59, 60; 104; 204) ausgebildet ist, um zu verhindern, dass das elastisch nachgebende Element (8; 57; 154; 207) die obere Fläche (2a; 51a; 101a; 151a; 201a) der unteren Platte (2; 51; 101; 151; 201) und/oder die untere Fläche (46; 1526) der oberen Platte (4; 52; 102; 152; 202) zu beeinträchtigen, und um sicherzustellen, dass es seine eigene strukturelle Integrität unverändert behält.

11. Vorrichtung (1; 50; 100; 150; 200) nach einem der Ansprüche 7 bis 10, wenn sie von Anspruch 4 und Anspruch 6 abhängt, **dadurch gekennzeichnet, dass** der Metalldraht (9) unmittelbar vor oder während seiner Anbringung in der Ringnut (13; 205, 206) der festen Übertragungskörper (11, 12; 59, 60; 104; 204) mit einer vorbestimmten Zugkraft vorgespannt wird.

12. Vorrichtung (100) nach einem der vorhergehenden Ansprüche, **dadurch gekennzeichnet, dass** sie zusätzliche Stützmittel (105) umfasst, die zwischen der unteren Platte (101) und der oberen Platte (102) angeordnet sind, die fest an der Oberseite (101a) der unteren Platte (101) befestigt sind und als zusätzliche Stützpunkte dienen können, um die obere Platte (102) horizontal zu halten und das Phänomen der Neigung der oberen Platte (102) in Bezug auf die untere Platte (101) zu vermeiden.

13. Vorrichtung (1; 50; 100; 150; 200) nach einem der vorhergehenden Ansprüche, **dadurch gekennzeichnet, dass** die linearen Führungsmittel (5; 103; 153) mindestens zwei Zwischenführungsgruppen (14, 15; 155, 156) des Typs mit hoher Torsions- und Biegesteifigkeit umfassen, die gegenseitig im Schnittpunkt entlang der Längsrichtungen (X, Y) orthogonal zueinander angeordnet sind, so dass die Bewegung der oberen Platte (4; 52; 102; 152; 202) in Bezug auf die untere Platte (2; 51; 101; 151; 201) in der gesamten horizontalen Ebene gewährleistet ist.

14. Vorrichtung (1; 50; 100; 150; 200) nach Anspruch 13, **dadurch gekennzeichnet, dass** die linearen Führungsmittel (5; 103; 153) mindestens eine erste Zwischenführungsgruppe (14; 155) umfassen, die mit der oberen Fläche (2a; 51a; 101a; 151a; 201a) der unteren Platte (2; 51; 101; 151; 201) gekoppelt ist, und mindestens eine zweite Zwischenführungsgruppe (15; 156), die mit der unteren Fläche (46; 1526) der oberen Platte (4; 52; 102; 152; 202) gekoppelt ist und mit der ersten Zwischenführungsgruppe (14; 155) durch Verbindungsmittel (18; 157) verbunden ist.

15. Vorrichtung (1; 50; 100; 150; 200) nach Anspruch 14, **dadurch gekennzeichnet, dass** die erste Zwischenführungsgruppe (14; 155) umfasst:
- eine untere Führungsschiene (19), die an der oberen Fläche (2a; 51a; 101a; 151a; 201a) der unteren Platte (2; 51; 101; 151; 201) gemäß einer ersten der Längsrichtungen (X, Y) befestigt ist;
- einen unteren Gleitblock (20), der auf der unteren Führungsschiene (19) durch Zwischenschaltung einer Vielzahl von Rollreibungselementen montiert ist.

16. Vorrichtung (1; 50; 100; 150; 200) nach Anspruch 14 oder 15, **dadurch gekennzeichnet, dass** die zweite Zwischenführungsgruppe (15; 156) umfasst:
- eine obere Führungsschiene (21), die an der Unterseite (4b; 151b) der oberen Platte (4; 52; 102; 152; 202) gemäß einer zweiten der Längsrichtungen (X, Y) befestigt ist;
- einen oberen Gleitblock (22), der auf der oberen Führungsschiene (21) durch Zwischenschaltung einer Vielzahl von Rollreibungselementen montiert ist.

## Revendications

1. Dispositif d'isolation (1 ; 50 ; 100 ; 150 ; 200) pour l'absorption d'ondes sismiques subies par une surface de référence comprenant :
- une plaque inférieure (2 ; 51 ; 101 ; 151 ; 201) adaptée pour être fermement fixée par des moyens d'ancrage (3) à une surface de référence ;
- une plaque supérieure (4 ; 52 ; 102 ; 152 ; 202), séparée de ladite plaque inférieure (2 ; 51 ; 101 ; 151 ; 201) et adaptée pour supporter au moins un objet à isoler et/ou à protéger ;
- des moyens de guidage linéaire (5 ; 103 ; 153), interposés entre ladite plaque inférieure (2 ; 51 ; 101 ; 151 ; 201) et ladite plaque supérieure (4 ; 52 ; 102 ; 152 ; 202) avec qui ils sont fermement couplés, adaptés pour faire en sorte que ladite plaque supérieure (4 ; 52 ; 102 ; 152 ; 202), lorsqu'une onde sismique agit sur ladite surface de référence, glisse par rapport à ladite plaque inférieure (2 ; 51 ; 101 ; 151 ; 201) le long de deux directions longitudinales (X, Y) orthogonales l'une à l'autre à partir d'une position initiale, dans laquelle ladite plaque supérieure (4 ; 52 ; 102 ; 152 ; 202) est alignée verticalement par rapport à ladite plaque inférieure (2 ; 51 ; 101 ; 151 ; 201), vers une pluralité de positions temporaires, dans lesquelles ladite plaque supérieure (4 ; 52 ; 102 ; 152 ; 202) est verticalement décentralisée par rapport à ladite plaque inférieure (2 ; 51 ; 101 ; 151 ; 201) ;
- des moyens d'absorption (6) de ladite onde sismique, interposés entre ladite plaque inférieure (2 ; 51 ; 101 ; 151 ; 201) et ladite plaque supérieure (4 ; 52 ; 102 ; 152 ; 202) et reliés de manière opérationnelle à ladite plaque supérieure (4 ; 52 ; 102 ; 152 ; 202), adaptés pour communiquer une force de résistance contre le glissement de ladite plaque supérieure (4 ; 52 ; 102 ; 152 ; 202) le long desdites directions longitudinales (X, Y) afin de dissiper l'énergie générée par ladite onde sismique sur ladite surface de référence ;
- des moyens de recentrage élastique (7), interposés entre ladite plaque inférieure (2 ; 51 ; 101 ; 151 ; 201) et ladite plaque supérieure (4 ; 52 ; 102 ; 152 ; 202) et reliés de manière opérationnelle à ladite plaque supérieure (4 ; 52 ; 102 ; 152 ; 202), adaptés pour ramener ladite plaque supérieure (4 ; 52 ; 102 ; 152 ; 202) de l'une quelconque desdites positions temporaires à ladite position initiale après que ladite onde sismique se soit produite sur ladite surface de référence,
**caractérisé en ce que** lesdits moyen d'absorption (6) de ladite onde sismique et lesdits moyens de recentrage élastique (7) sont regroupés dans un même élément élastiquement déformable (8 ; 57 ; 154 ; 207) fait d'un matériau à déformation élastique non linéaire et présent dans un ou plusieurs exemplaires.

2. Dispositif (1 ; 50 ; 100 ; 150 ; 200) selon la revendication 1, **caractérisé en ce que** ledit matériau à déformation élastique non linéaire inclut l'un quelconque des matériaux sélectionnés parmi le groupe constitué d'un alliage métallique à mémoire de forme ou un élastomère.

3. Dispositif (1 ; 50 ; 100 ; 150 ; 200) selon la revendication 2, **caractérisé en ce que** ledit alliage métallique à mémoire de forme comprend des éléments métalliques tels que le nickel et le titane qui confèrent audit alliage métallique dudit élément élastiquement déformable (8 ; 57 ; 154 ; 207) au moins la capacité de récupérer de grandes déformations, une ductilité élevée, une excellente résistance à la corrosion.

4. Dispositif (200) selon l'une quelconque des revendications précédentes, **caractérisé en ce que** ledit élément élastiquement déformable (207), dans un ou plusieurs exemplaires, est disposé sur plusieurs plans horizontaux mutuellement parallèles et espacés le long d'une direction verticale de manière à limiter un pourcentage de déformations de celui-ci.

5. Dispositif (50 ; 100 ; 150 ; 200) selon l'une quelconque des revendications 1 à 3, **caractérisé en ce que** ledit élément élastiquement déformable (57 ; 154 ; 207), dans un ou plusieurs exemplaires, est disposé le long d'un seul plan horizontal afin d'éviter ou au moins de limiter le phénomène de tangage de ladite plaque supérieure (52 ; 102 ; 152 ; 202) par rapport à ladite plaque inférieure (51 ; 101 ; 151 ; 201).

6. Dispositif (1 ; 50 ; 100 ; 150 ; 200) selon l'une quelconque des revendications précédentes, **caractérisé en ce que** ledit élément élastiquement déformable (8 ; 57 ; 154 ; 207) inclut un fil métallique (9) ayant des extrémités reliées entre elles par des moyens de verrouillage, ayant une longueur prédéfinie en fonction des dimensions desdites plaque inférieure (2 ; 51 ; 101 ; 151 ; 201) et plaque supérieure (4 ; 52 ; 102 ; 152 ; 202) et disposé dans l'espace intérieur (10 ; 106 ; 203) défini entre lesdites plaque inférieure (2 ; 51 ; 101 ; 151 ; 201) et plaque supérieure (4 ; 52 ; 102 ; 152 ; 202) selon un chemin prédéterminé.

7. Dispositif (1 ; 50 ; 100 ; 150 ; 200) selon l'une quelconque des revendications précédentes, **caractérisé en ce qu'**il inclut une pluralité de corps de transmission fixes (11, 12 ; 59, 60 ; 104; 204), fermement couplés par des moyens de jonction à la face supérieure (2a ; 51a ; 101a ; 151a ; 201a) de ladite plaque inférieure (2 ; 51 ; 101 ; 151 ; 201) et/ou à la face inférieure (46 ; 1526) de ladite plaque supérieure (4 ; 52 ; 102 ; 152 ; 202), disposés espacés les uns des autres selon un ordre prédéfini définissant un chemin tortueux préétabli pour ledit élément élastiquement flexible (8 ; 57 ; 154 ; 207) qui est couplé auxdits corps de transmission fixes (11, 12 ; 59, 60 ; 104; 204) de manière à envelopper partiellement lesdits corps de transmission fixes (11, 12 ; 59, 60 ; 104 ; 204) en s'insérant avec une partie limitée dans une rainure annulaire (13) réalisée dans chacun desdits corps de transmission fixes (11, 12 ; 59, 60 ; 104 ; 204).

8. Dispositif (1 ; 50 ; 100 ; 150 ; 200) selon la revendication 7, **caractérisé en ce que** le nombre desdits corps de transmission fixes (11, 12 ; 59, 60 ; 104 ; 204) dépend de la longueur dudit élément élastiquement déformable (8 ; 57 ; 154 ; 207) installé, du degré maximal de déformation attribué au niveau de la conception audit élément élastiquement déformable (8 ; 57 ; 154 ; 207) lorsque ladite onde sismique a lieu sur ladite surface de référence et de la course maximale le long desdites directions longitudinales (X, Y) attribuée au niveau de la conception à ladite plaque supérieure (4 ; 52 ; 102 ; 152 ; 202) lorsque ladite onde sismique a lieu sur ladite surface de référence.

9. Dispositif (1 ; 50 ; 100 ; 150 ; 200) selon la revendication 7 ou 8, **caractérisé en ce que** ledit élément élastiquement flexible (8 ; 57 ; 154; 207) coopère avec lesdits corps de transmission fixes (11, 12 ; 59, 60 ; 104 ; 204) coulissant dans ladite rainure annulaire (13 ; 205, 206) lorsque ladite onde sismique agit sur ladite surface de référence.

10. Dispositif (1 ; 50 ; 100 ; 150 ; 200) selon l'une quelconque des revendications 7 à 9, **caractérisé en ce que** ladite rainure annulaire (13 ; 205) est réalisée à l'extrémité libre (11a, 12a ; 204a) de chacun desdits corps de transmission fixes (11, 12 ; 59, 60 ; 104 ; 204) afin d'empêcher audit élément élastiquement déformable (8 ; 57 ; 154 ; 207) d'interférer avec ladite face supérieure (2a ; 51a ; 101a ; 151a ; 201a) de ladite plaque inférieure (2 ; 51 ; 101 ; 151 ; 201) et/ou ladite face inférieure (46 ; 1526) de ladite plaque supérieure (4 ; 52 ; 102 ; 152 ; 202) et de garantir qu'il conserve inchangée sa propre intégrité structurelle.

11. Dispositif (1 ; 50 ; 100 ; 150 ; 200) selon l'une quelconque des revendications 7 à 10, lorsqu'elle dépend de la revendication 4 et de la revendication 6, **caractérisé en ce que** ledit fil métallique (9) est préchargé, avec une force de traction prédéterminée immédiatement avant ou pendant son application à l'intérieur de ladite rainure annulaire (13 ; 205, 206) desdits corps de transmission fixes (11, 12 ; 59, 60 ; 104 ; 204).

12. Dispositif (100) selon l'une quelconque des revendications précédentes, **caractérisé en ce qu'**il inclut des moyens de support auxiliaires (105) interposés entre ladite plaque inférieure (101) et ladite plaque supérieure (102) fermement fixés à la face supérieure (101a) de ladite plaque inférieure (101) et adaptés pour servir de points de support supplémentaires afin de maintenir horizontale ladite plaque supérieure (102) pour éviter le phénomène de tangage de ladite plaque supérieure (102) par rapport à ladite plaque inférieure (101).

13. Dispositif (1 ; 50 ; 100 ; 150 ; 200) selon l'une quelconque des revendications précédentes, **caractérisé en ce que** lesdits moyens de guidage linéaire (5 ; 103 ; 153) comprennent au moins deux groupes de guidage intermédiaires (14, 15 ; 155, 156) du type à haute rigidité torsionnelle et flexionnelle, disposés mutuellement à l'intersection le long desdites directions longitudinales (X, Y) orthogonales entre elles, de manière à assurer le mouvement de ladite plaque supérieure (4 ; 52 ; 102 ; 152 ; 202) par rapport à ladite plaque inférieure (2 ; 51 ; 101 ; 151 ; 201) sur tout le plan horizontal.

14. Dispositif (1 ; 50 ; 100 ; 150 ; 200) selon la revendication 13, **caractérisé en ce que** lesdits moyens de guidage linéaire (5 ; 103 ; 153) comprennent au moins un premier groupe de guidage intermédiaire (14 ; 155) couplé à la face supérieure (2a ; 51a; 101a ; 151a; 201a) de ladite plaque inférieure (2 ; 51 ; 101 ; 151 ; 201) et au moins un second groupe de guidage intermédiaire (15 ; 156) couplé à la face inférieure (46 ; 1526) de ladite plaque supérieure (4 ; 52 ; 102 ; 152 ; 202) et rendu solidaire dudit premier groupe de guidage intermédiaire (14 ; 155) par des moyens d'interconnexion (18 ; 157).

15. Dispositif (1 ; 50 ; 100 ; 150 ; 200) selon la revendication 14, **caractérisé en ce que** ledit premier groupe de guidage intermédiaire (14 ; 155) comprend :
- une piste de guidage inférieure (19) fixée à ladite face supérieure (2a ; 51a ; 101a ; 151a ; 201a) de ladite plaque inférieure (2 ; 51 ; 101 ; 151 ; 201) selon une première desdites directions longitudinales (X, Y) ;
- un bloc coulissant inférieur (20) monté sur ladite piste de guidage inférieure (19) par l'interposition d'une pluralité d'éléments de résistance au roulement.

16. Dispositif (1 ; 50 ; 100 ; 150 ; 200) selon la revendication 14 ou 15, **caractérisé en ce que** ledit deuxième groupe de guidage intermédiaire (15 ; 156) comprend :
- une piste de guidage supérieure (21) fixée à ladite face inférieure (4b ; 151b) de ladite plaque supérieure (4 ; 52 ; 102 ; 152 ; 202) selon une deuxième desdites directions longitudinales (X, Y) ;
- un bloc coulissant supérieur (22) monté sur ladite piste de guidage supérieure (21) par l'interposition d'une pluralité d'éléments de résistance au roulement.
